# EUROPEAN PATENT SPECIFICATION

(11) **EP 2 653 678 B1**
(45) Date of publication and mention of the grant of the patent: **20.05.2015**
(21) Application number: 12164755.6
(22) Date of filing: 19.04.2012
(51) Int. Cl.: F01M 13/04

(54) **Separator device for use in a system for the recirculation of blow-by gases of an internal combustion engine**
Abscheidevorrichtung für eine Entlüftungsvorrichtung einer Brennkraftmaschine
Dispositif de separation d'huile dans un systéme de recirculation de gas de carter pour un moteur à combustion interne

(43) Date of publication of application: 23.10.2013
(73) Proprietor: Fiat Powertrain Technologies S.p.A., 10135 Torino (IT)
(72) Inventor: Polichetti, Carmine, I-10135 Torino (IT); Gentile, Michele, I-10135 Torino (IT)
(74) Representative: Notaro, Giancarlo

(56) References cited:
- EP-A1- 2 146 061
- EP-A1- 2 390 477
- FR-A1- 2 789 125

## Description

### Field of the invention

The present invention relates to a separator device for a system for recirculation of blow-by gases of an internal-combustion engine. In particular the invention relates to a separator device of the type comprising:
- an elongated casing defining a separation chamber and having a first end with an inlet for communication with the crankcase, a second end with an outlet for communication with the intake system of the engine, and a bottom wall with at least one sump for draining the liquid separated in the separation chamber, for return of the separated liquid into the crankcase;
- first open/close means associated to said inlet and configured for opening when an over-pressure is set up in the crankcase having a given value with respect to the pressure within the separation chamber and for remaining instead closed when a negative pressure is set up in the crankcase with respect to the separation chamber; and
- second open/close means associated to said at least one draining sump and configured for closing only when an over-pressure is set up in the crankcase having a given value with respect to the pressure within the separation chamber and for remaining open when a negative pressure is set up in the crankcase with respect to the separation chamber.

A separator device of the type referred to above is described and illustrated in the document No. EP 2 390 477 A1, filed in the name of the same present applicant.

### General technical problem

In internal-combustion engines, the blow-by gases that leak through the clearance between pistons and cylinders of the engine pass from the combustion chamber to the crankcase. They must be recirculated in the intake system of the engine. Said blow-by gases contain oil both in the form of vapour and in the form of droplets. Before recirculating the blow-by gases, it is necessary to separate the oil contained therein. Consequently, the task of the separator devices of the aforementioned type is to enable recirculation of the blow-by gases to the engine intake, at the same time preventing liquid particles from entering the intake circuit of the engine.

In engines with a number of cylinders, for example three or four cylinders, the pressure in the crankcase remains substantially constant throughout one turn of the engine shaft in so far as the volume of the crankcase remains substantially unvaried. For example, in the case of a four-cylinder engine, while the two pistons rise towards the top dead centre, the other two pistons descend towards the bottom dead centre. With engines of this type, by connecting the crankcase via pressure-regulating valves with an environment on average in negative pressure (typically the intake manifold) a permanent condition of negative pressure is guaranteed therein.

Instead, in one-cylinder engines or two-cylinder engines in which the phases of the two pistons are 360° apart, i.e., with the two pistons that that move concordantly towards the top dead centre and towards the bottom dead centre, the solution of setting the crankcase in negative pressure by connecting it to a source of negative pressure via regulating valves is not feasible. In fact, in this case the instantaneous pressure in the crankcase is markedly variable, given the considerable variation of volume that occurs in one turn of the engine shaft. Consequently, also separation of the part of oil present in the blow-by gases is problematic, given the alternating flow that is obtained in the separator device.

### Prior art

The aforesaid problem has been solved with the device forming the subject of the document No. EP 2 390 477 A1 mentioned above. Said known device is able to exploit the concordant displacement of the pistons of a two-cylinder engine to guarantee a correct condition of negative pressure in the crankcase, in addition to an effective action of separation and a subsequent draining of the separated oil for return thereof into the lubricating circuit. The operation of said separator device is guaranteed by the adoption of a one-way valve at the inlet of the aforesaid device and of open/close valves of the umbrella type, connected to the sumps for draining the separated oil. Both opening of the directional valve and opening of the open/close valves of the draining sumps is regulated by the conditions of pressure/negative pressure that are set up in the crankcase. The one-way valve at the inlet of the separator device is constituted by a metal flap that undergoes flexural deformation towards a configuration of opening when an over-pressure having a given value with respect to the pressure inside the separation chamber is set up in the crankcase, said flap remaining, instead, in a closing configuration when the crankcase is in negative pressure with respect to the separation chamber. The membrane valve associated to each draining sump is configured for undergoing deformation towards a configuration of closing of the respective sump when the crankcase is in over-pressure with respect to the separation chamber, whilst said membrane remains in a configuration of opening when the crankcase is in negative pressure with respect to the separation chamber.

In a one-cylinder engine, or in a two-cylinder engine with pistons having concordant motion, when the pistons move towards the bottom dead centre, they cause a reduction in the volume available in the crankcase and a consequent increase in pressure in the crankcase. In this case, in the aforesaid known device, the one-way valve at the inlet of the separator device opens and enables flow of the blow-by gases into the separator, whereas the membrane valves associated to the sumps for draining the oil are in their closing configuration. When the motion of the pistons is reversed and the pistons move towards the top dead centre, the pressure in the crankcase decreases, the reed valve at the inlet of the separator device closes, guaranteeing the condition of negative pressure in the crankcase. At the same time, the membrane valves of the draining sumps open, enabling return of a flow of air from the engine intake into the separation chamber and from here into the crankcase, said flow of air being thus useful for discharging the oil that has settled in the draining sumps again into the crankcase and into the lubricating circuit of the engine.

Once again in the case of the aforesaid known device, in order to guarantee a mean pressure of negative sign in the course of the engine cycle, it is necessary to size adequately the diameter of the draining sumps in such a way that said sumps will define an area of passage of dimensions much smaller than the area of passage at the inlet of the separator device.

Once again in the case of the aforesaid known separator device, the function of separation is guaranteed by the presence within the separation chamber of a series of diaphragms arranged transversely with respect to the longitudinal direction of the separation chamber. Moreover, the inlet of the separator device is shaped in such a way that the incoming flow, constituted by the gas/oil mixture, is oriented to impact against a first partition, favouring a first separation of the liquid part. The draining sumps are set in positions corresponding to the aforesaid partitions so as to collect the droplets of oil that stop against the partitions and run down them. Moreover, once again in the case of the aforesaid known device, the conformation and position of the partitions creates a sort of labyrinth, where the gas/oil mixture is forced to pass. Present in a position corresponding to each draining sump is a membrane valve for guaranteeing draining of the oil that has accumulated.

The aforesaid known device is consequently based on the principle of separation by impact. It guarantees a good efficiency of separation of the oil from the blow-by gases in almost all operating conditions of the engine.

The efficiency of separation can be evaluated by measuring the amount of oil that the separator does not manage to withhold within the engine and that circulates towards the intake circuit, together with the blow-by gases.

### Drawback of the prior art

There exist, however, given points of operation of the engine, where high rates of blow-by gases leak between pistons and cylinder liners. Said high rates of blow-by gases can render operation of the separator device critical. Said operating points are typically characterized by high levels of engine r.p.m., associated to low loads. The typical manoeuvres for the engine to be in said critical conditions can be quite common in driving of a vehicle by an average user, for example during gear change at high r.p.m.

In order to measure the efficiency of separation of the known device described above, the present applicant has used a test consisting in causing settling of the possible amount of oil present in the blow-by gases leaving the separator device in the direction of the engine intake. Said measurement is obtained with the adoption of a further cyclone separator device set at the outlet of the separator device and connected to a container. The test consists in keeping the engine continuously in an operating point characterized by a given engine r.p.m. and load. In said conditions, the amount of separated oil is measured in the aforesaid container during stationary operation of the engine for one hour. The testing points are chosen from the potentially most critical ones for operation of the separator, both on account of the high flowrates of the blow-by gases produced by the engine and on account of the values of pressure in the engine crankcase, as already mentioned previously.

During the engine bench tests with the known separator device, in the operating conditions of the engine described above, huge amounts of oil in the flow of gas entering the intake circuit were detected, which evidently were not withheld by the separator device (even 150 times higher than the desired maximum limit).

It is deemed that said criticality of operation of the known separator device is basically linked to the high instantaneous flowrates of blow-by vapours: the presence of the diaphragms within the separator device that create the aforesaid labyrinthine path causes marked reductions in the section of passage for the gases. At high flowrates of gas, reduced areas of passage entail high speeds of the gases and consequent onset of a turbulent regime inside the separator device. Said turbulence renders problematical settling of the liquid part of the mixture in so far as it facilitates entraining of the drops of liquid by the blow-by vapours leaving the separator device.

### Object of the invention

The object of the present invention is to improve the known device described above by solving the aforementioned problems.

In particular, an object of the invention is to provide a separator device of the type referred to at the start of the present description that will prevent high speeds of flow of the gases within the separator device in any condition of operation of the engine and will exploit a new and more efficient mode of separation of the oil contained in the mixture.

### Summary of the invention

With a view to achieving the above purpose, the subject of the invention is a separator device, which presents all the characteristics that have been referred to at the start of the present description and is moreover characterized in that the aforesaid separation chamber is without diaphragms arranged transversely with respect to the longitudinal direction of the separator device, and in that provided within the separation chamber is at least one inner wall set substantially parallel to the longitudinal direction of the separator device in such a way that the blow-by gases flow longitudinally within the separation chamber from the inlet situated at the first end as far as the outlet situated at the second end, lapping said at least one longitudinal inner wall so that the particles of liquid contained in the gas flow tend to stop owing to adhesion on said at least one longitudinal wall and then collect by gravity in said at least one draining sump. The aforesaid at least one longitudinal wall can be made of metal material or of a suitable plastic material. In one embodiment, it is constituted by a mesh.

Once again in the case of the preferred embodiment of the invention a number of longitudinal walls are provided substantially parallel to the longitudinal direction of the separation chamber and set at a distance apart from one another. In one embodiment, the aforesaid longitudinal walls are defined by a single sheet folded in bellows fashion, for example in the form of a metal or plastic mesh.

Thanks to the aforesaid characteristics, the separator device according to the invention enables an excellent efficiency of separation of the liquid phase from the gases to be obtained and at the same time also guarantees a minimal impact in terms of modifications as compared to the known separator device described above.

### Brief description of the figures

Further characteristics and advantages of the invention will emerge from the ensuing description with reference to the annexed drawings, which are provided purely by way of non-limiting example and in which:
- Figure 1 is a perspective view of the separator device known from the document No. EP 2 390 477 A1;
- Figures 2 and 3 are cross-sectional views of the known device of Figure 1, in two different conditions of operation;
- Figure 4 is a sectioned perspective view of an embodiment of the device according to the invention, in the condition where it is mounted on an engine;
- Figure 5 is a perspective view illustrating a component of the separator device according to the invention, prior to its installation within the separator device;
- Figure 6 is a schematic cross-sectional view of the separator device according to the invention; and
- Figure 7 is a schematic cross-sectional view according to the line VII-VII of Figure 6.

### Description of preferred embodiments

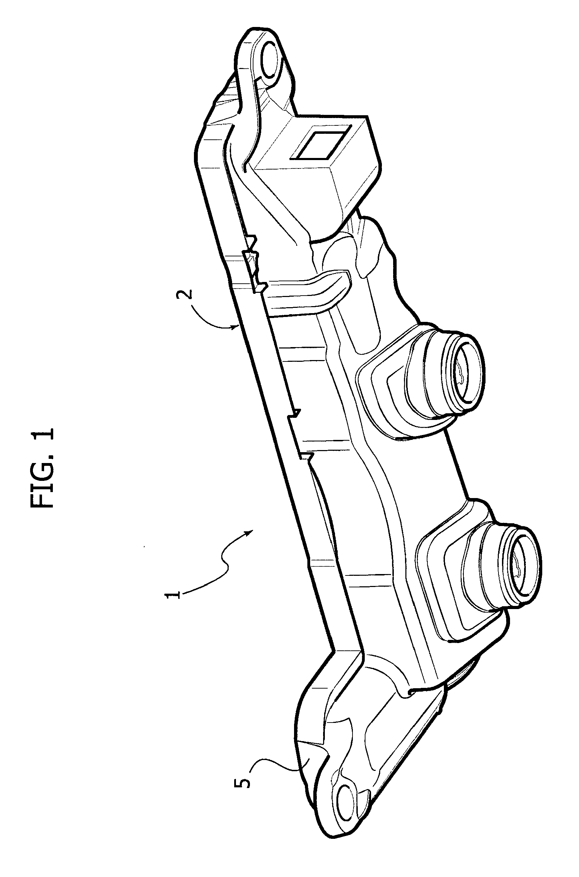

With reference to Figures 1-3, number 1 designates as a whole a separator device of the type known from the document No. EP 2 390 477 A1, designed to be installed on a two-cylinder internal-combustion engine, englobed in the tappet cover of the engine. The description of said known device is useful for the purposes of a better understanding of the invention.

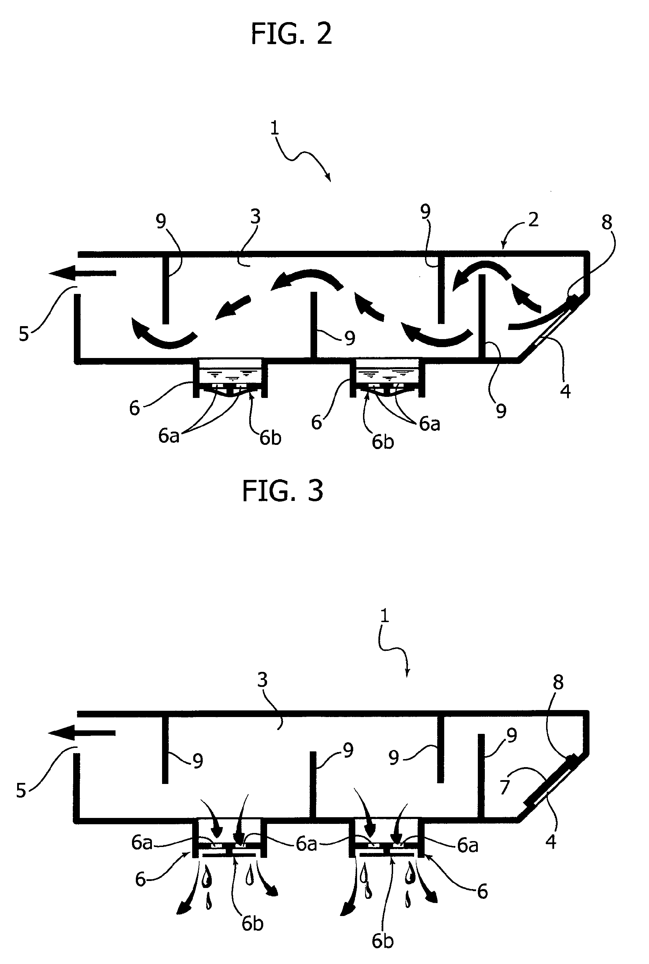

With reference also to Figures 2 and 3, the separator device 1 according to the prior art comprises a casing made of metal or plastic material 2 of an elongated shape, defining inside it a separation chamber 3, with a first end having an inlet 4, communicating with the crankcase, and a second end having an outlet 5 that is connected to the intake manifold of the engine by means of a duct of any known type (not illustrated). Provided in a position corresponding to the bottom wall of the casing 2 are two draining sumps 6 for collection of the oil that is separated from the blow-by gases within the separation chamber 3 and that is then returned to the crankcase. Each draining sump 6 has a bottom wall with holes 6a for communication with the crankcase.

Provided in a position corresponding to the inlet 4 is a one-way valve with an open/close element 7 in the form of a metal flap, fixed at one end in 8 to the casing 2 of the device. The flap 7 has an undeformed resting configuration, where it closes the opening 4

(Figure 3), whereas it undergoes flexural deformation, enabling inlet of the gases from the crankcase into the separation chamber 3 (Figure 2) when an over-pressure is set up in the crankcase with respect to the separation chamber 3.

Provided in a position corresponding to the bottom wall of each draining sump 6 is a membrane open/close element 6b shaped like a T set upside down or an umbrella set upside down, with a central supporting stem carried by the bottom wall of the respective sump. When an over-pressure is set up in the crankcase with respect to the separation chamber 3 (Figure 2) the membrane open/close elements 6b are deformed into a configuration in which they close the passage through the holes 6a. Instead, when a negative pressure is set up in the crankcase, the membrane open/close elements 6b remain in an undeformed resting condition, where the communication through the holes 6a is open.

Operation of the known device illustrated in Figures 1-3 is described in what follows.

In the step in which the two pistons of the two-cylinder engine move concordantly towards the bottom dead centre, the crankcase goes into over-pressure so that the blow-by gases present therein are pushed into the separation chamber 3 and traverse it longitudinally until they come out through the outlet 5 and return into the engine intake circuit. In traversing the separation chamber 3, the blow-by gases impact against a series of diaphragms 9, arranged transversely with respect to the longitudinal direction of the separator device 1, in such a way that the droplets of oil present in the gas flow tend to remain against said walls and to drop then by gravity towards the bottom of the casing, where they collect within the draining sumps 6.

In the step in which the two pistons of the engine move towards the top dead centre, a negative pressure is created inside the crankcase so that the reed valve 7 closes and the membrane open/close elements 6b go into the open configuration (Figure 3). Consequently, in said step the oil that previously had collected on the bottom of each draining sump 6 can return into the crankcase, passing through the holes 6a. Said phenomenon is favoured by the fact that the negative pressure in the crankcase recalls a flow of air from the engine intake through the separation chamber 3 and the sumps 6, as indicated by the arrows in Figure 3.

As also already clarified previously, in order to guarantee proper operation of the aforesaid device, the total section of passage defined by the holes 6a must be considerably smaller than the section of passage through the inlet opening 4.

As has also already been clarified, the aforesaid known device presents the drawback that at certain engine r.p.m. levels the restriction of the section of passage caused by the presence of the diaphragms 9 within the separation chamber 3 determines a flow with excessively high speed of the blow-by gases, with consequent insufficient separation of the oil contained in said flow.

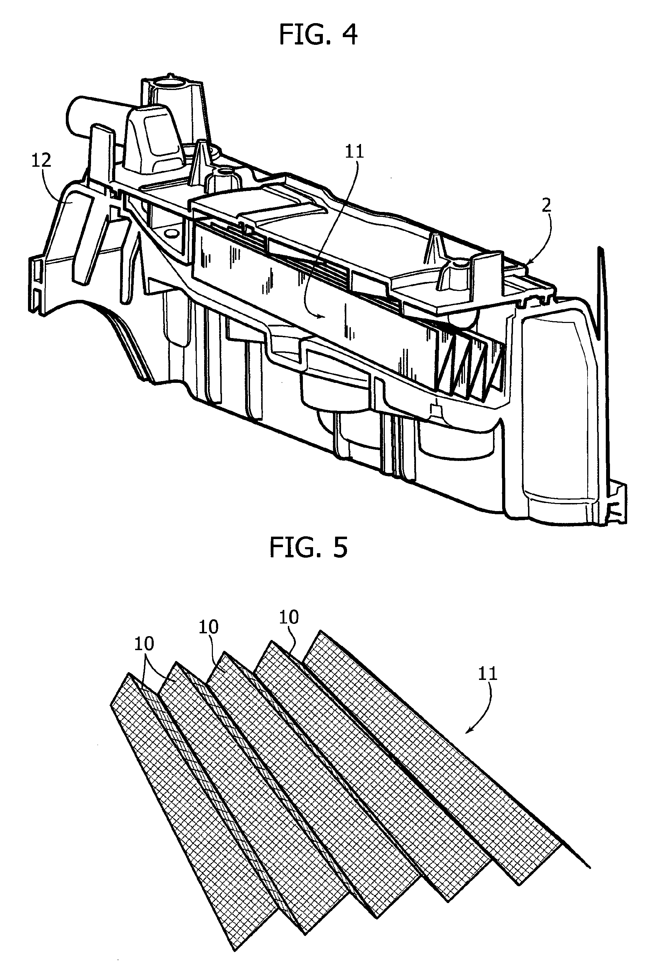

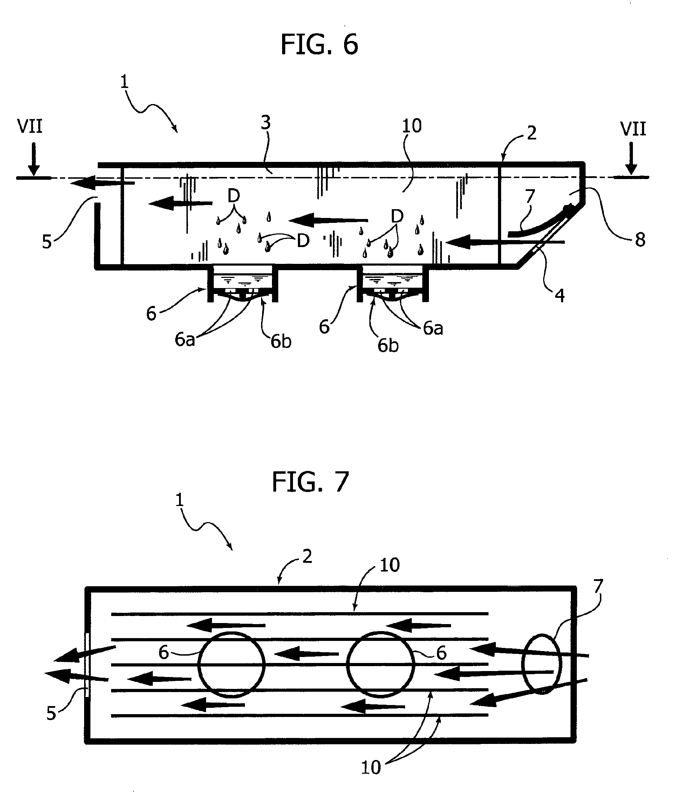

With a view to solving said problem, the separator device according to the present invention introduces some important modifications as compared to the known device, which are illustrated schematically in Figures 6 and 7. In said figures, as also in Figure 4, the parts in common with those of the known device illustrated in Figures 1-3 are designated by the same reference numbers.

With reference to Figures 6 and 7, the main difference between the device according to the invention and the known device described above lies in the fact that in the device according to the invention the separation chamber 3 is without diaphragms arranged transversely with respect to the longitudinal direction of the separator device and has, instead, one or more inner walls 10 set substantially parallel to the longitudinal direction of the separator device. Figures 6 and 7 refer to the case of seven mutually parallel walls set at a distance apart, contained in planes parallel to the longitudinal direction of the device and, in the case of this example, also orthogonal to the top and bottom walls of the casing 2.

Thanks to said arrangement, no reduction of the section of passage is created within the separation chamber 3 that can cause an excessively high speed of flow of the blow-by gases in the critical conditions of operation of the engine that have been described above. In this case, however, the separation of the drops of oil contained in the mixture takes place, not owing to an impact of the particles against diaphragms inside the separation chamber, but rather owing to a phenomenon of adhesion of the droplets of oil to the aforesaid longitudinal walls, while the gases flow parallel to said walls, lapping their surfaces. For the rest, operation of the device according to the invention remains identical to that of the known device, without this affecting all the characteristics that have been described above with reference to the inlet 4, the reed valve 7, the draining sumps 6, and the membrane open/close elements 6b.

Of course, it is altogether possible to provide at the inlet 4 an open/close valve having any other configuration of a known type, as likewise the draining sumps 6 and the corresponding membrane open/close elements 6b can have any other configuration of a known type.

Figure 6 shows schematically the step in which the crankcase is in overpressure so that the membrane open/close elements 6b are in their closing configuration, whilst the reed valve 7 undergoes flexural deformation to enable inlet of the flow of the blow-by gases, with consequent separation of the drops of oil D due to a phenomenon of adhesion to the surfaces of the longitudinal walls 10.

Of course, the material constituting the walls 10 can be any, and in particular can be metal material or plastic material. An example of embodiment envisages that one or more walls 10 are constituted by a mesh, the configuration of which (diameter of the wires of the mesh, dimensions of the openings of the mesh) is chosen with the aid of tests so as to maximize the effect of separation of the drops of oil.

Figure 4 is a perspective view that regards the case where all the longitudinal walls 10 are defined by a single sheet 11 folded in bellows fashion. Figure 4 shows said sheet set within the casing 2, in turn englobed in the tappet cover 12 of the engine.

Figure 5 shows an embodiment in which the sheet 11 is in the form of a mesh. Of course, in the case where the longitudinal walls 10 are constituted by a single sheet 11 folded in bellows fashion, each of said walls is always parallel to the longitudinal direction of the separator device, but is not orthogonal to the top and bottom walls of the casing of the separator device. As may be seen, the sheet folded in bellows fashion 11 can be simply mounted inside the separation chamber 3 in so far as, as a result of its very elasticity, it is held in position between the walls of said chamber since in the undeformed condition the folded sheet 11 occupies a space larger than the one available within the chamber 3.

To evaluate the improvement of the efficiency of separation of the device according to the invention, the present applicant has conducted tests according to the same procedure that has been described above as regards the prior art, in particular for conditions of operation of the engine that were critical for the known device. The results obtained with the known device and with the device according to the invention have been compared. From said comparison it has emerged that the adoption of the device according to the invention, above all in the critical conditions of operation mentioned above, improves the efficiency of separation by approximately 10 times. Furthermore, from the aforesaid tests it has emerged that the small reduction of section of passage due to the presence of the aforesaid longitudinal walls within the separation chamber does not give rise to a greater difficulty of evacuation of the blow-by gases from the crankcase and does not lead to any considerable increase in pressure within the crankcase.

Finally, it has been found that during operation of the known device the flow of gases within the separation chamber generates noise, which is further amplified by the cavity frequencies of the separation chamber. The adoption of the longitudinal walls in the device according to the invention, and the consequent elimination of the transverse diaphragms provided in the known device, enables modification of the aforesaid typical frequencies with a substantial reduction of noise.

Of course, without prejudice to the principle of the invention, the details of construction and the embodiments may vary widely with respect to what is described and illustrated herein purely by way of example, without thereby departing from the scope of the appended claims.

## Claims

1. A separator device for a system for recirculation of blow-by gases of an internal-combustion engine, comprising:
- an elongated casing (2) defining a separation chamber (3) and having a first end with an inlet (4) for communication with the crankcase, a second end with an outlet (5) for communication with the intake system of the engine, and an end wall with at least one sump (6) for draining the liquid separated in the separation chamber (3) for return of the separated liquid into the crankcase;
- first open/close means (7) associated to said inlet (4) and configured for opening when an overpressure is set up in the crankcase having a given value with respect to the pressure inside the separation chamber and for remaining instead closed when a negative pressure is set up in the crankcase with respect to the separation chamber (3); and
- second open/close means (6b) associated to said at least one draining sump (6) and configured for closing only when an overpressure is set up in the crankcase having a given value with respect to the pressure within the separation chamber (3) and for remaining open when a negative pressure is set up in the crankcase with respect to the separation chamber (3),
said separator device being **characterized in that** said separation chamber (3) is without diaphragms set transversely with respect to the longitudinal direction of the separator device, and **in that**
provided within the separation chamber (3) is at least one inner wall (10) set substantially parallel to the longitudinal direction of the separator device,
in such a way that the blow-by gases flow longitudinally inside the separation chamber (3) from the inlet (4) situated at the first end to the outlet (5) situated at the second end, lapping said at least one longitudinal inner wall (10)
so that the particles of liquid (D) contained in the gas flow tend to stop owing to adhesion on said at least one longitudinal wall (10) and then to collect by gravity in said at least one draining sump (6).

2. The separator device according to Claim 1, **characterized in that** said at least one longitudinal wall (10) is made of metal material.

3. The separator device according to Claim 1, **characterized in that** said at least one longitudinal wall (10) is made of plastic material.

4. The separator device according to Claim 1 or Claim 3, **characterized in that** said longitudinal wall (10) is constituted by a mesh.

5. The separator device according to Claim 1, **characterized in that** a number of longitudinal walls (10) are provided substantially parallel to the longitudinal direction of the separation chamber (3).

6. The separator device according to Claim 5, **characterized in that** said longitudinal walls (10) are defined by a single sheet (11) folded in bellows fashion.

7. The separator device according to Claim 6, **characterized in that** said sheet (11) folded in bellows fashion is constituted by a mesh.

8. The separator device according to Claim 1, **characterized in that** the first open/close means (7) associated to said inlet (4) are constituted by an open/close element with flexible flap (7).

9. The separator device according to Claim 1, **characterized in that** said second open/close means associated to said at least one draining sump (6) are constituted by a membrane open/close element (6b).

10. The separator device according to Claim 1, **characterized in that** the overall area of the section of passage defined by said at least one draining sump (6) is considerably smaller than the area of the section of passage through said inlet (4).

11. An internal-combustion engine comprising a single cylinder or two cylinders having pistons that move concordantly towards the top dead centre and towards the bottom dead centre so as to generate an oscillation of pressure in the crankcase, **characterized in that** said engine is provided with a separator device according to any one of the preceding claims.

## Patentansprüche

1. Abscheidevorrichtung für ein System zur Rückführung von Blowby-Gasen eines Verbrennungsmotors, umfassend:
- ein längliches Gehäuse (2), das eine Trennkammer (3) bildet und ein erstes Ende mit einem Einlass (4) zur Verbindung mit dem Kurbelgehäuse und ein zweites Ende mit einem Auslass (5) zur Verbindung mit dem Ansaugsystem des Motors sowie eine Stirnwand mit mindestens einem Sammelbehälter (6) aufweist, um die in der Trennkammer (3) abgeschiedene Flüssigkeit zur Rückführung der abgeschiedenen Flüssigkeit in das Kurbelgehäuse abzulassen;
- erste Öffnungs-/Schließeinrichtungen (7), die mit dem Einlass (4) verbunden und so gestaltet sind, dass sie öffnen, wenn in dem Kurbelgehäuse ein Überdruck mit einem gegebenen Wert bezüglich des Drucks innerhalb der Trennkammer aufgebaut ist, und stattdessen geschlossen bleiben, wenn ein Unterdruck in dem Kurbelgehäuse bezüglich der Trennkammer (3) aufgebaut ist; und
- zweite Öffnungs-/Schließeinrichtungen (6b), die mit dem mindestens einen Auslaufsammelbehälter (6) verbunden und so gestaltet sind, dass sie nur dann schließen, wenn in dem Kurbelgehäuse ein Überdruck mit einem vorgegebenen Wert bezüglich des Druckes innerhalb der Trennkammer (3) aufgebaut ist, und offen bleiben, wenn ein Unterdruck in dem Kurbelgehäuse bezüglich der Trennkammer (3) aufgebaut ist,
wobei die Abscheidevorrichtung **dadurch gekennzeichnet ist, dass** die Trennkammer (3) ohne relativ zur Längsrichtung der Abscheidevorrichtung quer angeordneten Scheidewände besteht, und dadurch, dass
innerhalb der Trennkammer (3) mindestens eine Innenwand (10) vorgesehen ist, die im Wesentlichen parallel zur Längsrichtung der Abscheidevorrichtung angeordnet ist, derart, dass die Blowby-Gase in Längsrichtung im Innern der Trennkammer (3) von dem Einlass (4), der sich am ersten Ende befindet, zu dem Auslass (5), der sich am zweiten Ende befindet, strömen, indem die mindestens eine Innenlängswand (10) überdeckt wird,
so dass die in dem Gasstrom enthaltenen Flüssigkeitspartikel (D) dazu neigen, wegen Adhäsion an der mindestens einen Längswand (10) zum Stillstand zu kommen und sich dann durch Schwerkraft in dem mindestens einen Auslaufsammelbehälter (6) zu sammeln.

2. Abscheidevorrichtung nach Anspruch 1, **dadurch gekennzeichnet, dass** die mindestens eine Längswand (10) aus einem Metallwerkstoff besteht.

3. Abscheidevorrichtung nach Anspruch 1, **dadurch gekennzeichnet, dass** die mindestens eine Längswand (10) aus einem Kunststoff besteht.

4. Abscheidevorrichtung nach Anspruch 1 oder Anspruch 3, **dadurch gekennzeichnet, dass** die Längswand (10) durch ein Geflecht gebildet ist.

5. Abscheidevorrichtung nach Anspruch 1, **dadurch gekennzeichnet, dass** eine Anzahl von Längswänden (10) im Wesentlichen parallel zur Längsrichtung der Trennkammer (3) vorgesehen ist.

6. Abscheidevorrichtung nach Anspruch 5, **dadurch gekennzeichnet, dass** die Längswände (10) durch ein einzelnes dünnes Blech (11) gebildet sind, das balgförmig gefaltet ist.

7. Abscheidevorrichtung nach Anspruch 6, **dadurch gekennzeichnet, dass** das balgförmig gefaltete dünne Blech (11) durch ein Geflecht gebildet ist.

8. Abscheidevorrichtung nach Anspruch 1, **dadurch gekennzeichnet, dass** die mit dem Einlass (4) verbundenen ersten Öffnungs-/Schließeinrichtungen (7) durch ein Öffnungs-/Schließelement mit elastischer Klappe (7) gebildet sind.

9. Abscheidevorrichtung nach Anspruch 1, **dadurch gekennzeichnet, dass** die mit dem mindestens einen Auslaufsammelbehälter (6) verbundenen zweiten Öffnungs-/Schließeinrichtungen durch ein Öffnungs-/Schließmembranenelement (6b) gebildet sind.

10. Abscheidevorrichtung nach Anspruch 1, **dadurch gekennzeichnet, dass** die Gesamtfläche des durch den mindestens einen Auslaufsammelbehälter (6) gebildeten Durchgangsquerschnitts erheblich kleiner als die Fläche des Durchgangsquerschnitts durch den Einlass (4) ist.

11. Verbrennungsmotor, umfassend einen einzelnen Zylinder oder zwei Zylinder mit Kolben, die sich im Einklang zu dem oberen Totpunktzentrum und zu dem unteren Totpunktzentrum hin bewegen, damit eine Druckschwankung in dem Kurbelgehäuse erzeugt wird, **dadurch gekennzeichnet, dass** der Motor mit einer Abscheidevorrichtung nach einem der vorhergehenden Ansprüche versehen ist.

## Revendications

1. Dispositif de séparation pour un système de recirculation de gaz de carter d'un moteur à combustion interne, comprenant :
- un boîtier allongé (2) définissant une chambre de séparation (3) et ayant une première extrémité avec une entrée (4) pour une communication avec le carter de moteur, une deuxième extrémité avec une sortie (5) pour une communication avec le système d'admission du moteur, et une paroi d'extrémité avec au moins un carter (6) pour évacuer le liquide séparé dans la chambre de séparation (3) pour le retour du liquide séparé dans le carter de moteur ;
- des premiers moyens d'ouverture/fermeture (7) associés à ladite entrée (4) et configurés pour s'ouvrir lorsqu'une surpression est établie dans le carter de moteur ayant une valeur donnée par rapport à la pression à l'intérieur de la chambre de séparation et pour rester plutôt fermés lorsqu'une pression négative est établie dans le carter de moteur par rapport à la chambre de séparation (3) ; et
- des deuxièmes moyens d'ouverture/fermeture (6b) associés audit au moins un carter de vidange (6) et configurés pour ne se fermer que lorsqu'une surpression est établie dans le carter de moteur ayant une valeur donnée par rapport à la pression à l'intérieur de la chambre de séparation (3) et pour rester ouverts lorsqu'une pression négative est établie dans le carter de moteur par rapport à la chambre de séparation (3),
ledit dispositif de séparation étant **caractérisé en ce que** ladite chambre de séparation (3) ne comprend pas de diaphragmes placés transversalement par rapport à la direction longitudinale du dispositif de séparation, et **en ce que**
au moins une paroi intérieure (10) placée de manière essentiellement parallèle à la direction longitudinale du dispositif de séparation est prévue dans la chambre de séparation (3),
de manière à ce que les gaz de carter s'écoulent longitudinalement à l'intérieur de la chambre de séparation (3) depuis l'entrée (4) située au niveau de la première extrémité vers la sortie (5) située au niveau de la deuxième extrémité, recouvrant ladite au moins une paroi intérieure longitudinale (10)
de sorte que les particules de liquide (D) contenues dans l'écoulement de gaz aient tendance à s'arrêter en raison d'une adhésion sur ladite au moins une paroi longitudinale (10) et ensuite à se réunir par gravité dans ledit au moins un carter de vidange (6).

2. Dispositif de séparation selon la revendication 1, **caractérisé en ce que** ladite au moins une paroi longitudinale (10) est réalisée en un matériau métallique.

3. Dispositif de séparation selon la revendication 1, **caractérisé en ce que** ladite au moins une paroi longitudinale (10) est réalisée en une matière plastique.

4. Dispositif de séparation selon la revendication 1 ou 3, **caractérisé en ce que** ladite paroi longitudinale (10) est constituée d'un maillage.

5. Dispositif de séparation selon la revendication 1, **caractérisé en ce qu'**un nombre de parois longitudinales (10) sont prévues de manière essentiellement parallèle à la direction longitudinale de la chambre de séparation (3).

6. Dispositif de séparation selon la revendication 5, **caractérisé en ce que** lesdites parois longitudinales (10) sont définies par une seule feuille (11) pliée en soufflet.

7. Dispositif de séparation selon la revendication 6, **caractérisé en ce que** ladite feuille (11) pliée en soufflet est constituée d'un maillage.

8. Dispositif de séparation selon la revendication 1, **caractérisé en ce que** les premiers moyens d'ouverture/fermeture (7) associés à ladite entrée (4) sont constitués d'un élément d'ouverture/fermeture avec un clapet flexible (7).

9. Dispositif de séparation selon la revendication 1, **caractérisé en ce que** lesdits deuxièmes moyens d'ouverture/fermeture associés audit au moins un carter de vidange (6) sont constitués d'un élément d'ouverture/fermeture à membrane (6b).

10. Dispositif de séparation selon la revendication 1, **caractérisé en ce que** l'aire totale de la section de passage définie par ledit au moins un carter de vidange (6) est considérablement plus petite que l'aire de la section de passage à travers ladite entrée (4).

11. Moteur à combustion interne comprenant un seul cylindre ou deux cylindres ayant des pistons qui se déplacent de façon concordante vers le point mort haut et vers le point mort bas de manière à générer une oscillation de pression dans le carter de moteur, **caractérisé en ce que** ledit moteur est pourvu d'un dispositif de séparation selon l'une quelconque des revendications précédentes.
